Europäisches Patentamt

European Patent Office

Office européen des brevets

(19)

(11) Veröffentlichungsnummer: **0 000 020**

**A1**

## (12) EUROPÄISCHE PATENTANMELDUNG

(21) Anmeldenummer: 78100032.8

(22) Anmeldetag: 01.06.78

(51) Int. Cl.²: **G 01 N 23/24, H 01 P 7/06**

(30) Priorität: 02.06.77 DE 2724959

(43) Veröffentlichungstag der Anmeldung:
20.12.78 Patentblatt 78 1

(84) Benannte Vertragsstaaten:
BE CH DE FR GB NL SE

(71) Anmelder: Bayer Aktiengesellschaft,
Zentralbereich Patente, Marken und Lizenzen Bayerwerk,
D-5090 Leverkusen 1 (DE)

(72) Erfinder: Fitzky, Hans Georg, Dr.,
Adolf-Kolping-Strasse 7,
D-5068 Odenthal-Hahnenberg (DE)

(72) Erfinder: Schmitt, Franz,
Heinrich-Lerch-Strasse 11,
D-5000 Köln 91 (DE)

(72) Erfinder: Bollongino, Norbert,
Friedrichshöhe 13,
D-5653 Leichlingen 1 (DE)

(72) Erfinder: Rehrmann, Helmutt,
Huescheider Strasse 19,
D-5090 Leverkusen 31 (DE)

(54) Vorrichtung zur Bestimmung des Wassergehaltes von isotropen Materialien mit Hilfe der Mikrowellenabsorption.

(57) Vorrichtung zur Bestimmung des Wassergehaltes von Isotropen Materialien mit Hilfe der Mikrowellenabsorption.

Der Wassergehalt von elektrisch nicht leitenden Pulvern, Granulaten, Pasten und Fasermaterialien kann auf der Basis der Mikrowellenabsorption gemessen werden.

Ein frequenzmodulierter Mikrowellenoszillator speist in einer Transmissionsanordnung einen geschlossenen Multimode-Messresonator, der mit der Probe beschickt ist. Die in einen Behälter (3) abgefüllte Probe füllt den Multimode-Resonator (22) nahezu vollständig aus. Der Probenbehälter ist um seine Längsachse drehbar.

Hierdurch wird eine weitgehende Homogenität der Feldverteilung in der Probe erzielt, so dass auch bei Schüttdichteschwankungen noch genaue Messungen möglich sind.

FIG 1

BAYER AKTIENGESELLSCHAFT    5090 Leverkusen, Bayerwerk
Zentralbereich    Ki/bc/Kü
Patente, Marken und Lizenzen

Vorrichtung zur Bestimmung des Wassergehaltes von isotropen Materialien mit Hilfe der Mikrowellenabsorption

Die Erfindung betrifft eine Vorrichtung zur Messung
des Wassergehaltes von elektrisch nicht leitenden
Pulvern, Granulaten, Pasten und Fasermaterialien,
bestehend aus einem frequenzmodulierten Mikrowellenoszillator, der in einer Transmissionsanordnung einen geschlossenen Multimode-Meßresonator speist, der mit der
Probe beschickt ist und einer Einrichtung zur Messung
der durch die Probe bedingten Güteänderung des Resonators.

Die schnelle Bestimmung des Wassergehaltes von Pulvern,
Granulaten, Pasten und Fasermaterial ist von Bedeutung
für die großtechnische Herstellung dieser Materialien.
Als Beispiele werden angeführt: Pharmazeutische Produkte,
Kunststoffgranulate, Waschmittelrohstoffe und Fertigprodukte, Baustoffe und Keramikvorprodukte und landwirtschaftliche Erzeugnisse.

Zur Überwachung der industriellen Produktion und Verarbeitung dieser Produkte wird eine schnell arbeitende Meßeinrichtung benötigt, deren Meßresultate unter anderem zur

Le A 17 566

Steuerung des Betriebsablaufes oder zur Qualitätskontrolle bei der Endabnahme dienen können.

In der Literatur beschriebene Geräte zur Messung des Wassergehaltes von Schüttgütern, Pasten usw. sind meist als Freistrahlgeräte konzipiert, die zur Kontrolle von kontinuierlich bewegtem Material vorgesehen sind und die wegen der schwankenden Schüttdichte und Reflexion der Meßstrahlung nur relativ ungenaue Resultate liefern, bzw. deren technische Ausführung nicht zur schnellen und präzisen Routinemessung in Betriebslaboratorien geeignet ist (DT-OS 2 017 061 und DT-OS 2 309 278). In der GIT-Fachzeitschrift für das Laboratorium, Band 1974, Seite 869 bis 880 und Seite 994 bis 1000 werden Mikrowellenfeuchte-Meßgeräte für pulverförmige oder granulatförmige Produkte beschrieben. Als Meßgröße wird die Güteänderung des Resonators durch die Probe benutzt. Der Resonator wird mit einem frequenzmodulierten Mikrowellenoszillator gespeist. Der Frequenzhub wird dabei so groß gewählt, daß die Resonanzkurve des Resonators sowohl im leeren als auch im gefüllten Zustand (mit Probe) vollständig überstrichen wird. Hinter dem Transmissionsresonator befindet sich ein Mikrowellendetektor, dessen Gleichspannungssignal ein direktes Maß für die Materialfeuchte liefert. Beim Arbeiten mit solchen Geräten hat sich jedoch gezeigt, daß die Meßgenauigkeit stark schwankt. Es wurde gefunden, daß die Genauigkeit von der Probenmenge abhängt. Ferner hat sich gezeigt, daß selbst geringe Schüttdichtevariationen des Produktes das Meßergebnis nennenswert beeinflussen. Der zuletzt genannte Effekt wirkt sich besonders störend aus, wenn derartige Geräte als Routinemeßgeräte im Labor benutzt werden.

Le A 17 566

Der Erfindung liegt die Aufgabe zugrunde, die bekannte Multimode-Resonatormeßtechnik zur Bestimmung des Wassergehaltes von großvolumigen Pulver- bzw. Granulatproben hinsichtlich der Meßgenauigkeit und Reproduzierbarkeit zu verbessern. Insbesondere sollen Störungen der Meßgenauigkeit durch örtliche Produktinhomogenitäten, wie z.B. Korngrößen- und Schüttdichteschwankungen vermieden werden.

Diese Aufgabe wird erfindungsgemäß dadurch gelöst, daß die in einen Behälter abgefüllte Probe den Multimode-Resonator nahezu vollständig ausfüllt und der Probenbehälter um seine Zylinderachse drehbar ist.Durch diese Maßnahmen wird in Verbindung mit der Frequenzmodulationstechnik zur Wobbelung der Vielzahl von angeregten Moden eine so weitgehende Homogenität der Feldverteilung und des Leistungsflusses durch die Probe erzielt, daß auch bei lokalen Produktinhomogenitäten in der Regel noch eine Meßgenauigkeit von ± 5 % möglich ist.

Vorteilhaft ist der zylindrische Multimode-Resonator so dimensioniert, daß $0,5 < \dfrac{D}{L} < 2$ und $D > 3\lambda$ erfüllt ist. Dabei bedeuten D der Durchmesser, L die Länge des Resonators und $\lambda$ die Mikrowellenlänge. Eine weitere Verbesserung hinsichtlich der homogenen Feldverteilung wird dadurch

Le A 17 566

erreicht, daß an eins bis vier Stellen der Zylinderwandung oder des Bodens in gleichmäßigen Abständen in der Höhe und/oder azimutal in 90° Winkelabständen reflexionsarm angepaßte Zuführungen für die Mikrowellen vorgesehen sind.

Eine Weiterentwicklung der Erfindung ist dadurch gekennzeichnet, daß zur integralen Strahlungsabsorption im ganzen Meßvolumen an eins bis vier Stellen der Zylinderwandung oder des Bodens in gleichmäßigen Abständen in der Höhe und/oder azimutal in 90° Winkelabständen angepaßte Detektoren (Mikrowellengleichrichter) angebracht sind, die mit einer Summationsschaltung zur Darstellung des Transmissionswertes verbunden sind.

Der Probenbehälter besteht vorteilhaft aus einem den ganzen Innenraum ausfüllenden dünnwandigen, herausnehmbaren, zylindrischen Teflonbehälter, der in eine axiale Rotation mit mehr als einer Umdrehung pro Sekunde versetzt werden kann.

Gemäß einer bevorzugten Ausführung der Erfindung ist der Multimode-Resonator mit einer abnehmbaren Deckplatte ausgestattet, die durch einen zur Hälfte der Höhe mit Teflon gefüllten Ringspalt im Ansatz der Deckelinnenfläche und durch eine metallkontaktfreie Auflage des Deckelflansches auf den Gegenflansch am Zylinderteil einen reproduzierbaren und ausstrahlungsfreien Mikrowellenkontakt bildet.

Zur Messung der produktabhängigen Mikrowellenabsorption wird die Gütefaktoränderung des Multimode-Resonators beim Einbringen der Probe herangezogen. Hierzu hat sich eine

Differenzschaltung bewährt, die die Differenz zwischen
dem gleichgerichteten Mikrowellensignal am Eingang des
Resonators (Referenzsignal) und dem gleichgerichteten
Mikrowellensignal (Summe) am Resonatorausgang (Transmissionssignal) bildet und diese Differenz digital angezeigt wird.

Die Vorteile der Erfindung liegen wie schon erwähnt, in
der erhöhten Meßgenauigkeit und Reproduzierbarkeit bei
großvolumigen Pulver- bzw. Granulatproben unterschiedlicher Zusammensetzung und unterschiedlicher Schüttdichte. Durch die spezielle Konstruktion des Probenbehälters wird ferner eine schnelle Messung ermöglicht.
Das in den Behälter eingewogene Produkt kann unmittelbar von der Waage in den Meßresonator eingebracht werden. Dabei sorgen einerseits die reproduzierbare Probenhalterung und andererseits die Maßnahmen zur Feldhomogenisierung für eine lageunabhängige Erfassung des Meßwertes.

Im folgenden wird ein Ausführungsbeispiel der Erfindung
anhand einer Zeichnung näher erläutert. Es zeigen
Figur 1 eine Seitenansicht des Meßresonators,
Figur 2 ebenfalls eine Seitenansicht, bei der der Meßresonator
gegenüber Figur 1 jedoch um 90$^\circ$ gedreht ist,
Figur 3 die Ein- und Auskopplung der Mikrowellen in den
Resonator und
Figur 4 ein Blockschema des gesamten Mikrowellenfeuchtemeßgerätes mit Multimode-Resonator.

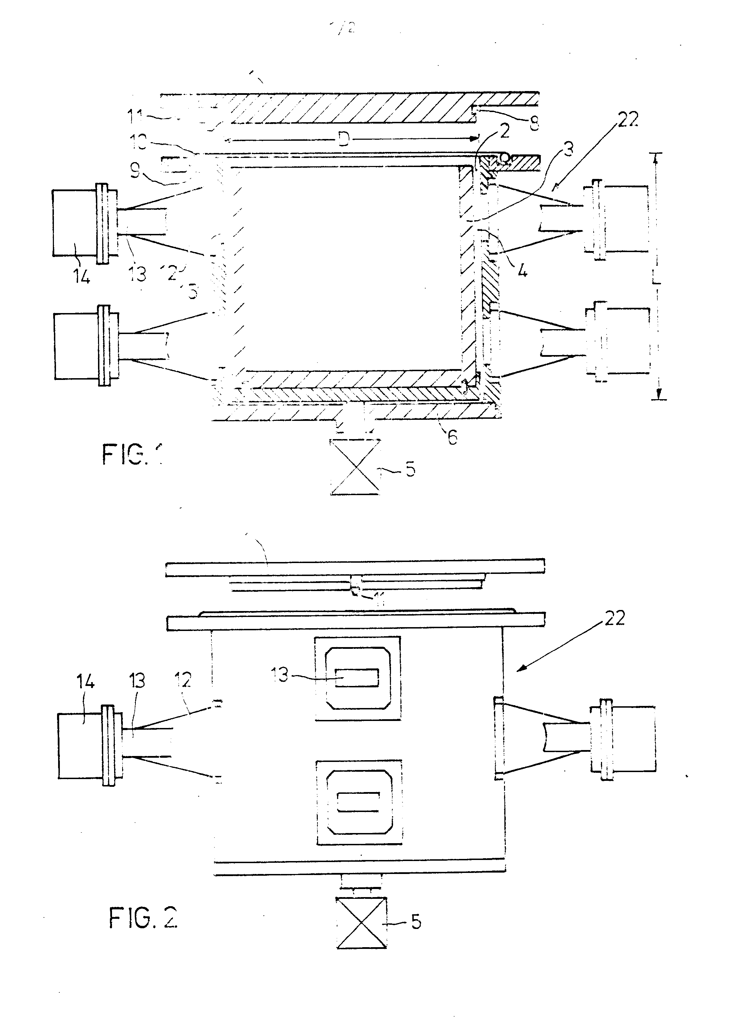

Der Resonator gemäß den Figuren 1 und 2 besteht aus einem durch einen Deckel 1 verschließbaren zylindrischen Hohlraum 2. In diesen Hohlraum kann ein aus Polytetrafluoräthylen gefertigter zylindrischer Probenbehälter 3 eingesetzt werden. Der Probenbehälter 3 füllt praktisch den gesamten Resonatorraum aus, so daß nur ein kleiner Spalt 4 zwischen der Behälterwand und der Innenwand des Resonators verbleibt. Auf diese Weise werden störende Resonanzen im Bereich zwischen Behälter und Resonatorwand vermieden. Der Probenbehälter 3 ist um seine Längsachse drehbar. Der Antrieb 5 für den Probenbehälter 3 befindet sich am Boden 6 des Resonators. Zusätzlich kann der Probenbehälter 3 mit einem oder mehreren Metallflügeln verbunden werden, die eine zusätzliche Wobbelung der Wellenfelder durch variable Reflexionsverhältnisse (bezogen auf die Ein- und Auskopplung der Strahlung) bewirken. Eine Umdrehungsfrequenz zwischen 1 und 20 Hz ist im allgemeinen ausreichend.

Der Resonator wird bezüglich Länge L und Durchmesser D so dimensioniert, daß $0,5 < \frac{D}{L} < 2$ und $D > 3\,\lambda$ ist ($\lambda$ = Mikrowellenlänge). Je kleiner die Meßwellenlänge gegenüber den Gefäßabmessungen ist, desto besser wird die Homogenität des Meßfeldes.

Der Deckel 1 zum Verschließen des Resonators besteht aus einer Metallplatte, die im Bereich des Resonatorinnenraumes eine größere Dicke aufweist. In verschlossenem Zustand bildet der in den Resonatorraum hineinragende Teil 7 des Deckels mit der Innenwand des Resonators einen Ringspalt, der zur Hälfte seiner Höhe mit einem Teflonring 8 ausgefüllt ist. Dieser Teflonring 8 und ein weiterer in einer

Le A 17 550

außerhalb des Resonatorraumes befindlichen Nut 9 liegender Dichtungsring 10 sorgen für eine metallkontaktfreie Auflage des Deckelflansches auf dem Gegenflansch am Resonator. **Auf diese Weise bildet der Deckel 1 mit dem Gegenflansch am Resonator einen reproduzierbaren und ausstrahlungsfreien Mikrowellenkontakt.**

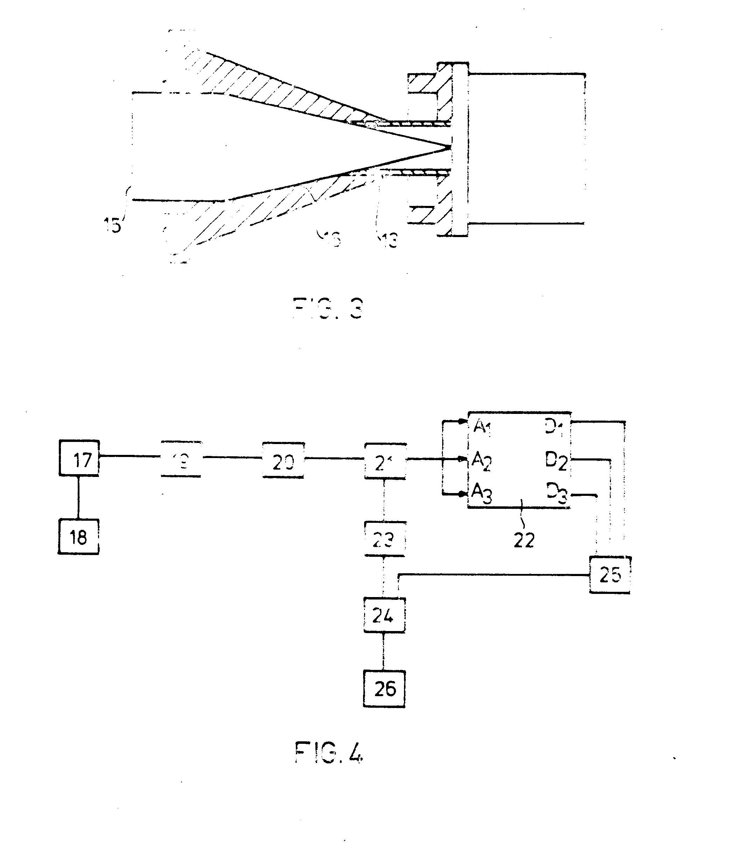

Die Mikrowelle wird gleichzeitig an 3 Stellen mit Hilfe der Adapter 12 eingekoppelt. Die Adapter sorgen für einen reflexionsarmen Übergang der Mikrowellenenergie aus den Rechteckwellenleitern 13 in den Resonator. Die Einspeisung der Mikrowelle an 3 Seiten trägt wesentlich zur Verbesserung der Feldhomogenität im Resonatorraum 2 bei. Das Transmissionssignal wird mit Hilfe der 3 Detektoren 14 (Mikrowellengleichrichter) abgefragt. Die 3 Detektoren 14 sind ebenso wie die Adapter 12 seitlich versetzt, wobei sich Adapter und Detektoren jeweils gegenüberstehen (s. auch Figur 2). Die Mikrowellendioden befinden sich in den Rechteckwellenleitern 13, während die Auskopplung aus dem Resonator ebenso wie die Einkopplung durch die kreisförmigen Blenden 15 erfolgt. Der Übergang der Mikrowelle vom Resonator in den Rechteckwellenleiter 13 wie in umgekehrter Richtung bei den Adaptern 12. Die breitbandig reflexionsarme Ein- und Auskopplung geschieht durch einen Teflonkonus 16, der den Querschnitt der Öffnung 15 vollständig ausfüllt und mit seiner Spitze in den $H_{10}$-Rechteckwellenleiter 13 hineinragt (s. Figur 3).

Die Mikrowellenanordnung zur Messung des Transmissionssignales wird anhand des Blockschaltbildes Figur 4 beschrieben. Der frequenzmodulierte Mikrowellenoszillator

Le A 17 566

17 (Modulator 18) gibt im überstrichenen Frequenzbereich eine annähernd konstante Leistung an die nachfolgende Meßanordnung ab. Seine Frequenz liegt zwischen 3 und 30 GHz. Der Frequenzhub wird zwischen 10 und 10 000 MHz eingestellt. Die Modulationsfrequenz kann im Bereich von 1 Hz bis 100 kHz gewählt werden. Die Wahl der Meßfrequenz ist durch die Lage des Maximums der Wasserbande bestimmt, wobei die exakte Lage des Maximums von der Temperatur und der Bindungsfestigkeit des Wassers beeinflußt wird.

In diesem Zusammenhang soll auch auf die Möglichkeit der Minimierung des Temperatureinflusses, auf die Messung durch Wahl einer für ein bestimmtes Temperaturintervall günstigsten Frequenz hingewiesen werden, z.B. fällt die Mikrowellenabsorption von freiem Wasser bei 9,3 GHz von $10^{\circ}$C bis $30^{\circ}$C (Absorptionswert bei $10^{\circ}$C zu 100 gesetzt) von 100 auf 68, während sie bei 24 GHz von 100 auf 113 ansteigt. Das Maximum der Absorption liegt bei 9,3 GHz etwa bei $0^{\circ}$C und bei 24 GHz etwa bei $30^{\circ}$C. Allgemein gilt: Höhere Temperaturen verschieben das Maximum der Absorption zu höheren Frequenzen (kürzere Relaxionszeit des Wasserdipols), während eine festere Bindung des Wasserdipols z.B. in einer stark polaren Matrix zu einer Erniedrigung der Frequenz des Absorptionsmaximums führt. Aus diesem Grunde wird die hier beschriebene Anordnung für dieMessung von relativ hohen Wassergehalten in der Größenordnung von 5 bis 15 Gew.-% bei höheren Frequenzen betrieben als z.B. Geräte, die für die Bestimmung der Restfeuchte (feste Wasserbindung) ausgelegt sind. Ein weiteres Kriterium für die Wahl der Meßfrequenz besteht darin, daß die Meßwellenlänge möglichst klein gegenüber den Abmessungen des Probenbehälters 3 gewählt wird, um

Le A 17 566

0000020

die Homogenität des Meßfeldes zu verbessern.

Die vom Oszillator 17 abgegebene Strahlung wird über eine
Einwegleitung 19, und einen Richtkoppler 21 dem Multimode-
Resonator 22 zugeführt. Die Intensität $I_o$ am Eingang A1, A2,
A3 des Resonators 22 wird mit dem Mikrowellendetektor 23
gemessen, dessen Gleichspannungssignal dem Meßverstärker
24 zugeführt wird. Wie schon bei der Beschreibung von Figur 1 erwähnt, erfolgt die Einspeisung der Mikrowelle in
den Meßresonator 22 an mehreren in der Höhe und azimutal
versetzten Stellen A1, A2, A3. Den 3 Einkoppelstellen A1,
A2, A3 wird mit Hilfe eines Leistungsteilers die gleiche
Mikrowellenleistung zugeführt. Durch die Einspeisung an
verschiedenen Stellen erreicht man, daß sehr viele Eigenschwingungen des Multimode-Resonators angeregt werden und
sich dadurch eine weitgehend homogene Intensitätsverteilung im Resonatorraum einstellt.

In ähnlicher Weise sind zur Erfassung der Mikrowellenabsorption in allen Volumenelementen des Resonators gleichartig verteilte Meßdetektoren D1, D2, D3 (Mikrowellendioden
14, s. Figur 1) vorgesehen, deren Gleichstromausgangssignale in einer Summationsschaltung 25 addiert werden. Das
Summationssignal wird dem anderen Eingang des Meßverstärkers 24 zugeleitet, der die Differenz zwischen diesem Signal und dem Referenzsignal $I_o$ bildet. Diese Differenz
stellt die Meßgröße für den Wassergehalt dar und wird direkt mit einem Digitalvoltmeter 26 anzeigt.

Der dünnwandige Probenbehälter 3 (Wandstärke 1 bis 3 mm)
braucht nicht vollständig mit der Probe gefüllt zu werden.
Es ist jedoch zweckmäßig, bei der Messung desselben Ma-

Le A 17 566

terials gleichbleibende Mengen einzuwiegen. Der Motor 5 wird so eingestellt, daß der Probenbehälter 3 mit einer Frequenz von 1 bis 5 Umdrehungen pro Sekunde langsam rotiert. Bei gut homogenen Materialien kann auf den rotierenden Behälter verzichtet werden und das Produkt direkt in den metallischen Hohlraum 2 eingefüllt werden. Die Meßgenauigkeit liegt bei dieser Anordnung ungünstigstenfalls bei ± 5 % des Meßwertes. Von wesentlicher Bedeutung für die Reproduzierbarkeit der Messung ist die kontaktfreie und strahlungsdichte Abdichtung des Meßresonators 22 durch die spezielle Deckelkonstruktion 1.

Patentansprüche

1) Vorrichtung zur Messung des Wassergehaltes von elektrisch nicht leitenden Pulvern, Granulaten, Pasten und anderen isotropen Materialien, bestehend aus einem frequenzmodulierten Mikrowellenoszillator, der in einer Transmissionsanordnung einen geschlossenen Multimode-Meßresonator speist, der mit der Probe beschickt ist und einer Einrichtung zur Messung der durch die Probe bedingten Güteänderung des Resonators, dadurch gekennzeichnet, daß die in einen Behälter (3) abgefüllte Probe den Multimode-Resonator (22) nahezu vollständig ausfüllt und der Probenbehälter (3) um die Zylinderachse drehbar ist.

2) Vorrichtung nach Anspruch 1, dadurch gekennzeichnet, daß der Frequenzhub des den Resonator erregenden Mikrowellenoszillators (17) derart eingestellt ist, daß eine möglichst große Zahl von Eigenresonanzen angeregt wird, so daß eine weitgehend homogene Energiedichteverteilung resultiert.

3) Vorrichtung nach Anspruch 1 bis 2, dadurch gekennzeichnet, daß die Frequenz des Mikrowellenoszillators (17) zwischen 2 und 30 GHz, der Frequenzhub zwischen 10 und 10000 MHz und die Modulationsfrequenz zwischen 1 Hz und 100 kHz liegt.

4) Vorrichtung nach Anspruch 1 bis 3, dadurch gekennzeichnet, daß die Einrichtung zur Messung der Gütefaktoränderung aus einer Differenzschaltung (21), (23), (24), (25) besteht, die die Differenz zwischen dem gleichgerichteten Mikrowellensignal am Eingang des Meßresonators (22)
(Referenzsignal $I_o$) und dem gleichgerichteten Mikrowellensignal am Resonatorausgang nach Summation (25)
(Transmissionssignal) bildet und diese Differenz digital
angezeigt wird.

5) Vorrichtung nach Anspruch 1 bis 4, dadurch gekennzeichnet, daß der zylindrische Multimode-Resonator (22)
entsprechend $0,5 < \frac{D}{L} < 2$ und $D > 3 \, \lambda$ dimensioniert
ist und zur Erregung eines möglichst homogenen Innenfeldes an eins bis vier Stellen der Zylinderwandung
oder des Bodens in gleichmäßigen Abständen in der Höhe
und/oder azimutal in $90^o$ Winkelabständen reflexionsarm angepaßte Zuführungen A1, A2, A3 (14) für die Mikrowellen besitzt (D = Durchmesser, L = Länge des Resonators, $\lambda$ = Mikrowellenlänge).

6) Vorrichtung nach Anspruch 1 bis 5, dadurch gekennzeichnet, daß zur Messung der integralen Strahlungsabsorption im ganzen Meßvolumen an eins bis vier Stellen der
Zylinderwandung oder des Bodens in gleichmäßigen Abständen in der Höhe und/oder azimutal in $90^o$ Winkelabständen
angepaßte Mikrowellendetektoren D1 bis D3 (14) angebracht
sind, die mit einer Summationsschaltung (25) zur Darstellung des Transmissionswertes verbunden sind.

7) Vorrichtung nach Anspruch 1 bis 6, dadurch gekennzeichnet, daß zur Aufnahme der Probe eine den ganzen Innenraum (2) des Resonators (22) ausfüllender dünnwandiger
und herausnehmbarer zylindrischer Teflonbehälter (3)
vorgesehen ist, der in eine axiale Rotation mit einer

Le A 17 566

Umdrehungszahl größer eine Umdrehung pro Sekunde versetzt werden kann.

8) Vorrichtung nach Anspruch 1 bis 7, dadurch gekennzeichnet, daß der Multimode-Resonator (22) mit einer abnehmbaren Deckplatte (1) ausgestattet ist, die durch einen zur Hälfte der Höhe mit Teflon (8) gefüllten Ringspalt im Ansatz (7) der Deckelinnenfläche und durch eine metallkontaktfreie Auflage (10) des Deckelflansches auf den Gegenflansch am Zylinderteil des Resonators einen reproduzierbaren und ausstrahlungsfreien Mikrowellenkontakt bildet.

FIG. 1

FIG. 2

Europäisches
Patentamt

**EUROPÄISCHER RECHERCHENBERICHT**

Nummer der Anmeldung

C000020

EP 78 10 0032

| irie | Kennzeichnung des Dokuments mit Angabe, soweit erforderlich, der maßgeblichen Teile | betrifft Anspruch |
|---|---|---|

## EINSCHLÄGIGE DOKUMENTE

KLASSIFIKATION DER ANMELDUNG (Int.Cl.²)

| | | |
|---|---|---|
| | JOURNAL OF AGRICULTURAL ENGINEERING RESEARCH, vol. 20, 1975, London (GB) | 1,3 |
| | H.D.GORAKHPORWALLA et al "Determining moisture content of grain using micro-wave energy for drying", Seite 319-325 | |
| | * Kapitel 2 "The experimental applicator"; Abbildungen 1,2 * | |
| | — | |
| | INTERNATIONAL JOURNAL OF ELECTRONICS, vol. 37, nr. 4, 1974, London (GB) M.A.K.HAMID et al. "Open circuit step cavity resonator for continuous moni-toring of sheet moisture content", Seite 511-520 | 1-3 |
| | * Kapitel 5 "Experimental procedure"; Kapitel 7; Ansprüche; Abbildungen 10,11 * | |

G 01 N 23/24
H 01 P 7/06

RECHERCHIERTE SACHGEBIETE (Int.Cl.²)

G 01 N 23/24
H 01 P 7/06

KATEGORIE DER GENANNTEN DOKUMENTE

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patent-familie, übereinstimmendes Dokument

Der vorliegende Recherchenbericht wurde für alle Patentansprüche erstellt.